# EUROPÄISCHE PATENTSCHRIFT

(11) **EP 1 754 756 B1**
(45) Veröffentlichungstag und Bekanntmachung des Hinweises auf die Patenterteilung: **07.12.2016**
(21) Anmeldenummer: 06116774.8
(22) Anmeldetag: 07.07.2006
(51) Int. Cl.: C09C 1/56, C09D 17/00, C08K 3/04, C08L 101/00, C09D 7/00, C09D 11/324, C08L 21/00

(54) **KOHLENSTOFFMATERIAL**
Carbon material
Materiau de carbonne

(30) Priorität: 04.08.2005 DE 102005037336
(43) Veröffentlichungstag der Anmeldung: 21.02.2007
(73) Patentinhaber: Orion Engineered Carbons GmbH, 60528 Frankfurt am Main (DE)
(72) Erfinder: Lüthge, Thomas, 63452, Hanau (DE); McIntosh, Ralph, 63457, Hanau (DE); Tauber, Gerd, 63500, Seligenstadt (DE); Kalbitz, Werner, 63517, Rodenbach (DE); Lüdtke, Stephan, 63477, Maintal (DE); Fanghänel, Egon, 06114, Halle/S. (DE); Schukat, Gerd, 06217, Merseburg (DE)
(74) Vertreter: f & e patent

(56) Entgegenhaltungen:
- JP-A- 2000 212 468
- JP-A- 2000 248 194
- JP-A- 2000 248 197

## Beschreibung

Die Erfindung betrifft ein Kohlenstoffmaterial, ein Verfahren zu seiner Herstellung sowie seine Verwendung.

Aus EP 0 569 503 ist ein Verfahren zur Oberflächenmodifizierung von Kohlenstoffmaterial mit aromatischen Gruppen durch elektrochemische Reduktion eines Diazoniumsalzes bekannt.

Weiterhin ist bekannt, Kohlenstoffmaterial mit organischen Gruppen zu versehen, indem man die organischen Gruppen über eine Diazotierung/Azokupplung mit dem Kohlenstoffmaterial verknüpft (WO 96/18688).

Des weiteren ist bekannt, Kohlenstoffmaterialien mit organischen Gruppen zu versehen, indem man die organischen Gruppen mittels Umsetzungen mit Radikalbildnern (Ohkita K., Tsubokawa N. und Saitoh E., Carbon 16 (1978) 41; DE 100 12 784.3) oder über Cycloadditionen an das Kohlenstoffmaterial bindet (DE 100 12 783.5). Es ist bekannt, Kohlenstoffmaterial mit aliphatischen Verbindungen, die Diazoniumgruppen besitzen, umzusetzen (JP 11315220 A; Tsubokawa N., Kawatsura K. und Shirai Y., Int. Conf. Mater. Proc. 11 (1997) 537; Tsabukoawa N., Yanadori K. und Sone Y., Nippon Gomu Kyokaishi 63 (1990) 268). Die verwendeten Verbindungen sind aliphatische Verbindungen und keine aromatischen Diazoniumsalzverbindungen. Die Bindungsbildung zwischen den diazoniumgruppenhaltigen Verbindungen und dem Kohlenstoffmaterial erfolgt unter Abspaltung von Stickstoff und der Bildung von radikalischen Spezies, die für weitere Reaktionen (Grafting) als Startfunktionen dienen können.

Ebenso ist bekannt, Kohlenstoffmaterial durch Umsetzung mit Schwefelsäure oder SO₃ zu modifizieren (US 3,519,452; JP 2001-254033).

Aus JP 20011329205 ist bekannt, Kohlenstoffmaterial durch zweistufige Umsetzung zuerst mit OH-funktionalisierten Cyclopentadienylverbindungen und anschließend mit Schwefelsäure umzusetzen.

Die bekannten Verfahren haben folgende Nachteile:
◆ Die, neben dem giftigen und brandfördernden Natriumnitrit, ebenfalls zur Diazotierung verwendbaren nichtionischen organischen Nitrite sind giftig und leicht brennbar. Reste der Nitrite (Gegenionen, Alkylreste) verbleiben ungebunden als Verunreinigung im Kohlenstoffmaterial.
◆ Zur Durchführung der Diazotierung ist der Einsatz von Nitrit im sauren Medium erforderlich. Dabei können sich giftige Stickstoffoxide bilden.
◆ Radikalbildner sind thermisch bzw. photochemisch labil, explosionsgefährlich und können zu schwer beherrschbaren Kettenreaktionen führen.
◆ Synthese und Reinigung der entsprechenden Vorstufe der Radikalbildner laufen zum Teil über giftige bzw. geruchsbelästigende Stoffe und sind damit hinsichtlich des Herstellverfahrens, des Transports, der Verwendung und abschließenden Entsorgung kostenintensiv.
◆ Die bei Cyclisierungsreaktionen mit Stickstoffheterocyclen ablaufende Stickstoffextrusion kann zu plötzlichen, explosionsartigen Volumenausdehnungen bzw. Druckanstiegen führen, die die Reaktionsführung wesentlich erschweren.
◆ Die Umsetzung von Kohlenstoffmaterial mit Verbindungen, welche Azogruppen besitzen und unter Stickstoffextrusion Radikale bilden, kann ebenfalls zu plötzlichen, explosionsartigen Volumenausdehnungen bzw. Druckanstiegen oder aber zu thermischen schwer beherrschbaren Kettenreaktionen führen und somit die Reaktionsführung erschweren.
◆ Für die Umsetzung von Kohlenstoffmaterial mit Schwefelsäure oder Oleum werden besonders widerstandfähige, korrosions- und temperaturbeständige Materialien benötigt, als Nebenreaktion können unerwünschte und gefährliche Oxidationen auftreten und durch die notwendige Neutralisation können nach der Umsetzung Abwässer mit hoher Salzfracht anfallen, wobei ein Teil der anfallenden Salze als Verunreinigung auf dem Kohlenstoffmaterial zurückbleiben kann, was zu anwendungstechnischen Nachteilen führen kann.
◆ Die zweistufige Umsetzung mit Cyclopentadienylen und Schwefelsäure hat ebenfalls den Nachteil, dass korrosions- und temperaturbeständige Materialien benötigt werden. Zusätzlich kann eine quantitative wie qualitative umfangreichere Menge, zum Teil löslicher, Nebenprodukte auftreten, die ebenfalls zu Nachteilen führen können.

Nachteile der bekannten Kohlenstoffmaterialien mit organischen Gruppen sind die farbigen Nebenprodukte.

JP 2000212468A, JP 2000248197A und JP 2000228194A offenbaren Ruße mit organischen Gruppen, die durch Umsetzung mit 4-Amino-5-hydroxy-naphthalin-2,7-disulfonaten erhalten werden.

Aufgabe der Erfindung ist es Kohlenstoffmaterialien mit organischen Gruppen zur Verfügung zu stellen, die wenig farbige Nebenprodukte enthalten.

Gegenstand der Erfindung ist ein Kohlenstoffmaterial mit organischen Gruppen, welches dadurch gekennzeichnet ist, dass dieses erhältlich ist durch die Umsetzung von Kohlenstoffmaterial mit organischen Verbindungen ausgewählt aus

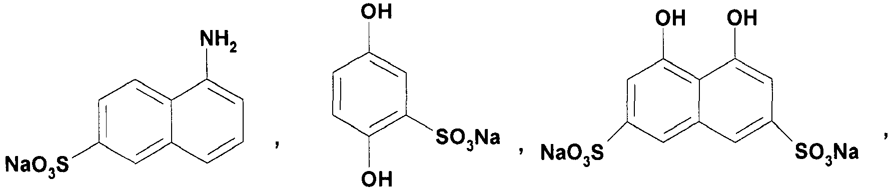

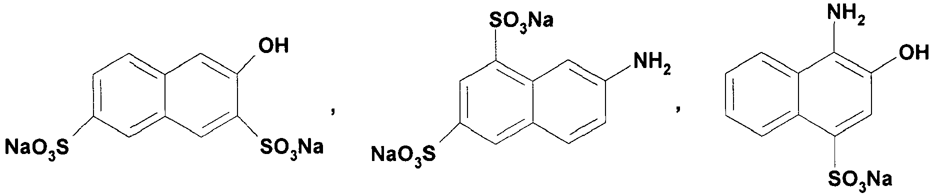

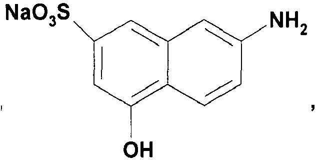

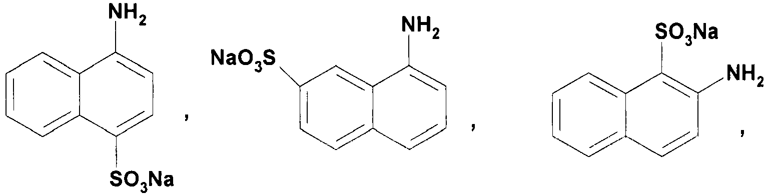

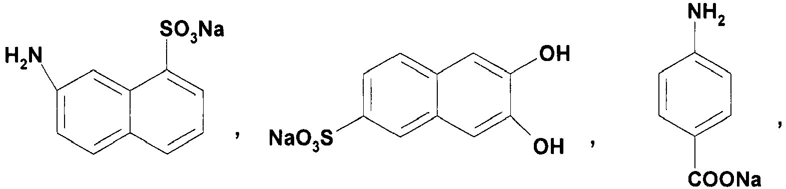

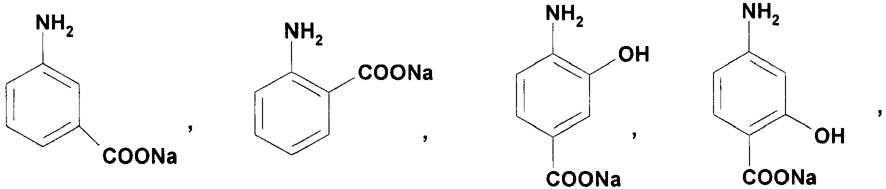

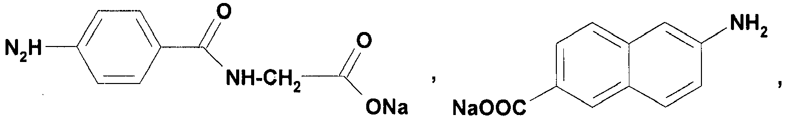

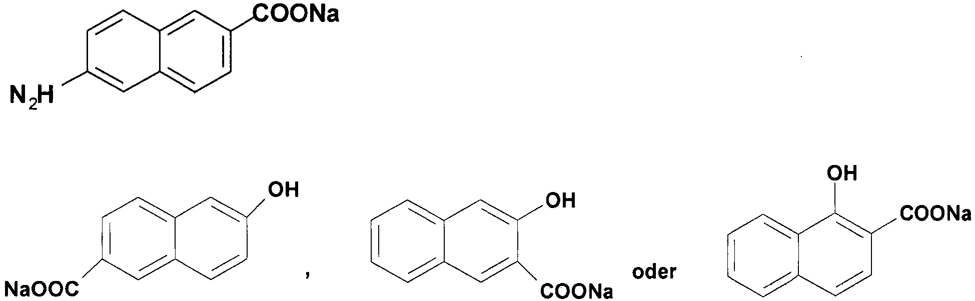

Die oben genannten Verbindungen können in der dargestellten Salzform oder mit einem anderen Gegenion, zum Beispiel K oder N(R⁹)₄, eingesetzt werden.

Als Kohlenstoffmaterial kann Ruß, Graphitpulver, Graphitfasern, Kohlenstofffasern, Kohlenstofffibrillen, Kohlenstoffnanoröhren (Carbon Nanotubes), Kohlenstoffgewebe, glasartige Kohlenstoffprodukte, Aktivkohle und Fullerene eingesetzt werden.

Als Ruß kann Furnaceruß, Gasruß, Channelruß, Flammruß, Thermalruß, Acetylenruß, Plasmaruß, Inversionsruß, bekannt aus DE 195 21 565, Si-haltige Ruße, bekannt aus WO 98/45361 oder DE 196 13 796, oder metallhaltige Ruße, bekannt aus WO 98/42778, Lichtbogenruß und Ruße, die Nebenprodukte chemischer Produktionsprozesse sind, eingesetzt werden.

Das erfindungsgemäße Kohlenstoffmaterial mit organischen Gruppen und/oder das Kohlenstoffmaterial kann durch vorgelagerte Reaktionen aktiviert werden. Dies können zum Beispiel Oxidationsreaktionen sein. Als Oxidationsmittel können beispielsweise Ammoniumperoxodisulfat, Wasserstoffperoxid, Ozon, Sauerstoff (rein oder als Luft), Kaliumbromat und/oder Natriumperborat eingesetzt werden.

Es können Kohlenstoffmaterialien, die als Verstärkerfüllstoff in Kautschukmischungen verwendet werden, eingesetzt werden. Es können Farbruße eingesetzt werden. Weitere Kohlenstoffmaterialien können sein: Leitfähigkeitsruß, Kohlenstoffmaterial zur UV-Stabilisierung, Kohlenstoffmaterial als Füllstoff in anderen Systemen als Kautschuk, wie zum Beispiel in Bitumen oder Kunststoff, oder Kohlenstoffmaterial als Reduktionsmittel in der Metallurgie.

Ein weiterer Gegenstand der Erfindung ist ein Verfahren zur Herstellung des erfindungsgemäßen Kohlenstoffmaterials mit organischen Gruppen, welches dadurch gekennzeichnet ist, dass man Kohlenstoffmaterial mit organischen Verbindungen der allgemeinen Formel 1 umsetzt.

Die Umsetzung des Kohlenstoffmaterials mit der organischen Verbindung der allgemeinen Formel 1 erfolgt nicht über ein Diazoniumsalz, das heißt, es wird kein Diazoniumsalz eingesetzt oder während der Reaktion gebildet.

Die organische Verbindung der allgemeinen Formel 1 kann auf das Kohlenstoffmaterial aufgebracht werden durch Sprühtrocknung einer Dispersion, enthaltend das Kohlenstoffmaterial und Verbindung der allgemeinen Formel 1, Einmischen oder Aufsprühen. Die organische Verbindung der allgemeinen Formel 1 kann als Pulver, Schmelze oder Lösung aufgebracht werden. Besonders vorteilhaft kann die Aufbringung der organischen Verbindung der allgemeinen Formel 1 während der Herstellung des Kohlenstoffmaterials sein, wobei die Zugabe der organischen Verbindung der allgemeinen Formel 1 vorzugsweise an einer Position des Reaktors erfolgt, die die notwendige Temperatur aufweist. Die Reaktion zur Modifizierung des Kohlenstoffmaterials kann vorzugsweise lösungsmittelfrei, aber auch in einem Lösungsmittel, vorzugsweise leicht flüchtigen organischen Lösungsmittel, durchgeführt werden. Die Reaktion zur Modifizierung des Kohlenstoffmaterials kann bei Temperaturen von -80°C bis +300°C, vorzugsweise von 80°C bis 250°C, durchgeführt werden. Erfolgt die Modifizierung während der Herstellung des Kohlenstoffmaterials, so können die Temperaturen zwischen 250°C und 1500°C liegen. Der Energieeintrag kann mittels mechanischer Energie, Schwingungsenergie, beispielsweise Ultraschall, oder Strahlungsenergie, beispielsweise Mikrowellenstrahlung, Wärmestrahlung, Lichtstrahlung, Röntgen- und Elektronenstrahlung, erfolgen. Die Reaktion zur Modifizierung des Kohlenstoffmaterials kann unter Ausschluss eines Oxidationsmittels oder in Gegenwart eines Oxidationsmittels (beispielsweise Luft, Wasserstoffperoxid, Peroxide, Perborate, Persulfate oder Ozon) erfolgen.

Die Umsetzung von Kohlenstoffmaterial mit Verbindungen der allgemeinen Formel 1 kann in einem Mengenverhältnis Kohlenstoffmaterial zu Verbindung der allgemeinen Formel 1 von 99,99 zu 0,01 bis zu einem Mengenverhältnis von 0,01 zu 99,9 erfolgen. Vorzugsweise kann das Mengenverhältnis Kohlenstoffmaterial zu Verbindung der allgemeinen Formel 1 in einem Bereich von 50 zu 1 bis 1 zu 50 liegen.

Die Umsetzung von Kohlenstoffmaterial mit Verbindungen der allgemeinen Formel 1 kann in einem Druckbereich von 1 mbar bis 250 bar durchgeführt werden. Bevorzugt kann die Umsetzung in einem Druckbereich 100 mbar bis 50 bar stattfinden.

Die erfindungsgemäßen Kohlenstoffmaterialien mit organischen Gruppen können als Füllstoff, Verstärkerfüllstoff, UV-Stabilisator, Leitfähigkeitsruß oder Pigment verwendet werden.

Die erfindungsgemäßen Kohlenstoffmaterialien mit organischen Gruppen können in Kautschuk, Kunststoff, Druckfarben, Tinten, Inkjet-Tinten, xerographischen Tonern, Lacken und Farben, Bitumen, Beton und anderen Baustoffen oder Papier eingesetzt werden. Ferner können die erfindungsgemäßen Kohlenstoffmaterialien als Reduktionsmittel in der Metallurgie verwendet werden. Die erfindungsgemäßen Kohlenstoffmaterialien mit organischen Gruppen können zur Herstellung von Gummimischungen, insbesondere zur Herstellung von Reifen verwendet werden.

Ein weiterer Gegenstand der Erfindung ist eine Dispersion, welche dadurch gekennzeichnet ist, dass diese das erfindungsgemäße Kohlenstoffmaterial mit organischen Gruppen und mindestens ein Lösungsmittel enthält.

Dabei kann die organische Gruppe auf das jeweilige Dispersionsmedium maßgeschneidert werden. So können mit polaren organischen Gruppen modifizierte Kohlenstoffmaterialien besonders für polare Medien geeignet sein. Polare Medien können Lösungsmittel, wie zum Beispiel Alkohole, Ketone, Ester, Säuren, Amine, Glykole, Glykolether oder halogenierte Lösungsmittel, aber auch Oligomere, beziehungsweise Polymere mit polaren Gruppen, wie zum Beispiel Carbonyl-, Ester-, Amino-, Carboxyl-und/oder Hydroxylgruppen, sein. Für wässrige Medien können Kohlenstoffmaterialien mit organischen Gruppen, wie beispielweise -SO₃W, COOW oder OH, mit W = H, Alkaliionen oder Ammoniumionen, besonders gut geeignet sein. Für hydrophobe Medien wie aliphatische, aromatische, heteroaliphatische und/oder heteroaromatische Kohlenwasserstoffe, können hydrophob modifizierte Kohlenstoffmaterialien mit hydrophoben Gruppen, wie Alkyl, Alkyloxy, Aryl und/oder Hetaryl, besonders gut geeignet sein. Für Medien, die hinsichtlich ihrer Polarität zwischen den relativ unpolaren, hydrophoben Medien und den stark polaren Medien liegen, wie zum Beispiel Ether und/oder Gemische aus polaren und unpolaren Medien, können speziell abgestimmte Modifizierungen, zum Beispiel mit Amino-, Carbonyl- oder Halogensubstituenten, besonders gut geeignet sein.

Die erfindungsgemäße Dispersion kann zusätzlich ein oder mehrere Additive enthalten, wie Biozide, Netzmittel, Ketone, Glykole, Alkohole oder Gemische der vorgenannten Verbindungen. Diese Additive können auf spezielle Anwendungen hin zugesetzt werden und zum Beispiel auch aus monomeren, oligomeren oder polymeren Verbindungen bestehen. Diese Additive können Verbesserungen von Eigenschaften, wie Dispergiergrad, Lagerstabilität, Gefrierstabilität, Trocknungsverhalten, Filmbildungsvermögen, Vernetzbarkeit und/oder die Anbindung an bestimmte Trägermaterialien, wie Papier, Metall, Glas, Polymere, Fasern, Leder, Holz, Beton oder Kautschuk, bewirken.

Ein weiterer Gegenstand der Erfindung ist ein Verfahren zur Herstellung der erfindungsgemäßen Dispersion, welches dadurch gekennzeichnet ist, dass man die Dispergierung des erfindungsgemäßen Kohlenstoffmaterials mit organischen Gruppen in mindestens einem Lösungsmittel mit Perlmühlen, Ultraschall-Geräten, Hochdruckhomogenisatoren, Microfluidizern, Rotor-Stator-Aggregate, beispielsweise Ultra-Turrax, oder vergleichbaren Aggregaten durchführt.

Die erfindungsgemäßen Dispersionen können in Kautschuk, Kunststoff, Druckfarben, Tinten, Inkjet-Tinten, xerographischen Tonern, Lacken und Farben, Bitumen, Beton und anderen Baustoffen oder Papier eingesetzt werden.

Die erfindungsgemäßen Dispersionen können zur Einfärbung und zum UV-Schutz von Kunststoffen, Latizes, Textilien, Leder, Klebstoffen, Silikonen, Beton, Baustoffen, Papier, Fasern und Erde oder zur antistatischen Ausrüstung von Materialien verwendet werden.

Die erfindungsgemäßen Kohlenstoffmaterialien mit organischen Gruppen weisen den Vorteil auf, dass polar modifizierte Kohlenstoffmaterialien (zum Beispiel mit SO₃M-Substituenten) besser in polaren Systemen, vorrangig Wasser, dispergierbar sind,
unpolar modifizierte Kohlenstoffmaterialen (zum Beispiel mit Alkylgruppen) besser in unpolaren Systemen, wie zum Beispiel Ölen, dispergierbar sind,
geeignet modifizierte Kohlenstoffmaterialien mit polaren oder sterisch sperrigen Gruppen in den Systemen elektrostatisch, beziehungsweise sterisch stabilisiert werden und zur Stabilisierung keine weiteren Hilfsstoffe, wie zum Beispiel Netzmittel, notwendig sind,
nach dem erfindungsgemäßen Verfahren modifizierte Kohlenstoffmaterialien besser in Dispersionen stabilisiert sind und so bessere koloristische Eigenschaften, wie Farbtiefe und Blaustichigkeit, aufweisen,
nach dem erfindungsgemäßen Verfahren modifizierte Kohlenstoffmaterialien, auf Grund der breiteren Variabilität der hydrophilen Substituenten, auf speziellen Anwendungsanforderungen (beispielsweise hohe optische Dichte und geringes inter-colour-bleeding im Inkjet-Bereich) besser maßgeschneidert werden können,
Kohlenstoffmaterialien mit gebundenen Farbstoffen veränderte Farbtöne aufweisen,
Kohlenstoffmaterialien mit weiterhin reaktiven Substituenten zur Kopplung und Vernetzung in Systemen (zum Beispiel Kautschuk), genutzt werden können,
reaktiv modifizierte Kohlenstoffmaterialien eine Anbindung der Kohlenstoffmaterialien an ein Polymer ermöglichen und Kohlenstoffmaterialien dabei arm an Nebenprodukten, Salzen, Säuren und Feuchtigkeit hergestellt werden können.

### Beispiele

Als Kohlenstoffmaterial wird in den Beispielen der Ruß S 160 eingesetzt. Der Ruß S 160 ist ein Verkaufsprodukt der Firma Degussa AG.

### Bestimmung des pH - Wertes:

Zur Bestimmung des pH-Wertes wird ein pH-Meter CG 837 der Firma Schott verwendet. Die Messung erfolgt an der unverdünnten Suspension.

Dazu wird die Glaselektrode in die Lösung getaucht und nach fünf Minuten der temperaturkorrigierte pH-Wert abgelesen.

### Bestimmung der Viskosität:

Das rheologische Verhalten der unverdünnten Suspension wird in einem Rotationsversuch mit Schergeschwindigkeitsvorgabe (CRS) mit einem Physica Rheometer UDS 200 erfasst. Die Probe wird dazu auf 23°C temperiert. Bei einer Schergeschwindigkeit von 1000 s⁻¹ wird der Viskositätswert abgelesen.

### Bestimmung der Oberflächenspannung:

Mit dem Blasentensiometer BP2 der Firma Krüss wird die dynamische und statische Oberflächenspannung einer auf 20°C temperierten Probe ermittelt. Für die dynamische Oberflächenspannung wird der Endwert bei 15 ms und für die statische Oberflächenspannung bei 3000 ms abgelesen.

### Beispiel 1: Modifizierung von Kohlenstoffmaterial mit Natrium-7-amino-4-hydroxy-2-naphthalensulfonat.

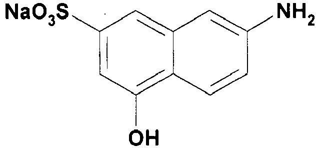

4 g 7-Amino-4-hydroxy-2-naphthalensulfonsäure werden in 150 ml Wasser suspendiert, unter Rühren mit 0,67 g Natriumhydroxid in 50 ml Wasser in Lösung gebracht, 20 g Ruß S 160 hinzugegeben, danach das Lösungsmittel im Vakuum abdestilliert und das verbliebene Gemisch 4 Stunden auf 180°C erhitzt.

### Beispiel 2: Modifizierung von Kohlenstoffmaterial in fester Phase mit Natrium-5-amino-2-naphthalensulfonat.

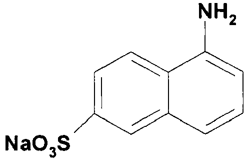

4 g Natrium-5-amino-2-naphthalensulfonat und 20 g Ruß S 160 werden gemischt, 5 ml Wasser zugetropft, noch einmal gemischt und anschließend 4 Stunden auf 180°C erhitzt.

### Beispiel 3: Modifizierung von Kohlenstoffmaterial mit Natrium-5-amino-2-naphthalensulfonat.

4 g Natrium-5-amino-2-naphthalensulfonat werden in 150 ml Wasser suspendiert, unter Rühren mit 0,72 g Natriumhydroxid in 50 ml Wasser in Lösung gebracht, 20 g Ruß S 160 hinzugegeben, danach das Lösungsmittel im Vakuum abdestilliert und das verbliebene Gemisch 4 Stunden auf 180°C erhitzt.

### Beispiel 4: Modifizierung von Kohlenstoffmaterial mit Natriumhydrochinonsulfonat.

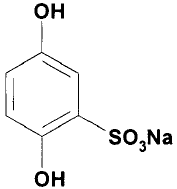

### 4 g Natrium-hydrochinonsulfonat und 4,5 g

Ammoniumperoxodisulfat werden in jeweils 150 ml Wasser gelöst und nacheinander zu 20 g Ruß S 160 gegeben, danach das Lösungsmittel im Vakuum abdestilliert und das verbliebene Gemisch 4 Stunden auf 180°C erhitzt. Der modifizierte Ruß wird mit 300 ml Wasser gewaschen und danach bei Raumtemperatur getrocknet.

### Beispiel 5: Modifizierung von Kohlenstoffmaterial mit Dinatrium-4,5-dihydroxy-2,7-naphthalendisulfonat.

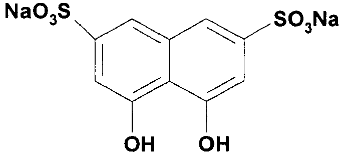

4 g Dinatrium-4,5-dihydroxy-2,7-naphthalensulfonat werden in 200 ml Wasser gelöst und zu 20 g Ruß S 160 gegeben. Anschließend fügt man 10 ml 30-prozentiges Wasserstoffperoxid zu und destilliert das Lösungsmittel im Vakuum ab. Das verbleibende Gemisch wird 4 Stunden auf 180°C erhitzt. Der modifizierte Ruß wird mit 300 ml Wasser gewaschen und danach bei Raumtemperatur getrocknet.

### Beispiel 6: Modifizierung von Kohlenstoffmaterial in fester Phase mit Natrium-4-amino-3-hydroxy-naphthalensulfonat.

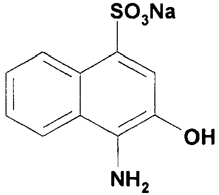

4 g Natrium-4-amino-3-hydroxy-naphthalensulfonat und 20 g Ruß S 160 werden gemischt, 3 ml 30-prozentiges Wasserstoffperoxid zugetropft, noch einmal gemischt und anschließend 4 Stunden auf 180°C erhitzt. Der modifizierte Ruß wird mit 300 ml Wasser gewaschen und danach bei Raumtemperatur getrocknet.

### Beispiel 7 (Vergleich): Modifizierung von Kohlenstoffmaterial mit Dinatrium-4-amino-5-hydroxy-2,7-naphthalen-disulfonat.

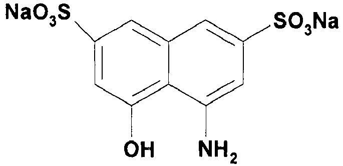

4 g Dinatrium-4-amino-5-hydroxy-2,7-naphthalen-disulfonat werden in 250 ml Wasser gelöst, zu 20 g Ruß S 160 gegeben und danach das Lösungsmittel im Vakuum abdestilliert. Der Rückstand und 2,7 g Ammoniumperoxodisulfat werden gemischt und anschließen 4 Stunden auf 180°C erhitzt. Der modifizierte Ruß wird mit 300 ml Wasser gewaschen und danach bei Raumtemperatur getrocknet.

### Beispiel 8: Modifizierung von Kohlenstoffmaterial mit 6-Amino-2-naphtholcarbonsäure-Na-Salz

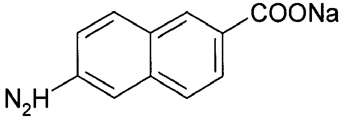

4g 6-Amino-2-naphtholcarbonsäure werden in 200ml Wasser suspendiert, unter Rühren mit 1 mol/l NaOH Lösung auf einen pH-Wert von 7,5 neutralisiert und in Lösung gebracht. 40g Ruß S160 wird hinzugegeben, danach das Lösungsmittel im Vakuum abdestiliert und das verbliebene Gemisch 4 Stunden bei 200°C erhitzt.

### Beispiel 9: Dispersion von modifiziertem

### Kohlenstoffmaterial in Wasser.

15 g Kohlenstoffmaterial mit organischen Gruppen gemäß Beispiel 1 wird mit 85 ml Wasser verrührt und anschließend 30 Minuten bei 5000 U/min mittels Ultra Turrax dispergiert. Die erhaltene Dispersion ist ohne weitere Zugabe von Netzmittel stabil.
Dynamische Oberflächenspannung bei 15 ms: 78 mN/m
Statische Oberflächenspannung bei 3000 ms: 69 Nm/m
pH-Wert: 6,5
Viskosität: 3,2 mPas

### Beispiel 10: Dispersion von modifiziertem

### Kohlenstoffmaterial in Wasser.

15 g Kohlenstoffmaterial mit organischen Gruppen gemäß Beispiel 2 werden mit 85 ml Wasser verrührt und anschließend 30 Minuten bei 5000 U/min mittels Ultra Turrax dispergiert. Die erhaltene Dispersion ist ohne weitere Zugabe von Netzmittel stabil.
Dynamische Oberflächenspannung bei 15 ms: 82 mN/m
Statische Oberflächenspannung bei 3000 ms: 71 Nm/m
pH-Wert: 7,2
Viskosität: 2,9 mPas

### Beispiel 11: Dispersion von modifiziertem

### Kohlenstoffmaterial in Wasser.

15 g Kohlenstoffmaterial mit organischen Gruppen gemäß Beispiel 3 werden mit 85 ml Wasser verrührt und anschließend 30 Minuten bei 5000 U/min mittels Ultra Turrax dispergiert. Die erhaltene Dispersion ist ohne weitere Zugabe von Netzmittel stabil.
Dynamische Oberflächenspannung bei 15 ms: 77 mN/m
Statische Oberflächenspannung bei 3000 ms: 70 Nm/m
pH-Wert: 7,0
Viskosität: 2,7 mPas

### Beispiel 12: Dispersion von modifiziertem Kohlenstoffmaterial in Wasser

15 g Kohlenstoffmaterial mit organischen Gruppen gemäß Beispiel 4 werden mit 85 ml Wasser verrührt und anschließend 30 Minuten bei 5000 U/min mittels Ultra Turrax dispergiert. Die erhaltene Dispersion ist ohne weitere Zugabe von Netzmittel stabil.
Dynamische Oberflächenspannung bei 15 ms: 81 mN/m
Statische Oberflächenspannung bei 3000 ms: 70 Nm/m
pH-Wert: 7,5
Viskosität: 2,9 mPas

### Beispiel 13: Dispersion von modifiziertem Kohlenstoffmaterial in Wasser

15 g Kohlenstoffmaterial mit organischen Gruppen gemäß Beispiel 8 wird in 85 ml Wasser verrührt und anschließend 30 Minuten bei 5000 U/min mittels Ultra Turrax dispergiert. Die erhaltene Dispersion ist ohne weitere Zugabe von Netzmittel stabil.
Dynamische Oberflächenspannung bei 15 ms: 86 mN / m
Statische Oberflächenspannung bei 3000 ms: 71 Nm / m
pH-Wert: 8,5
Viskosität: 2,7 mPas

## Patentansprüche

1. Kohlenstoffmaterial mit organischen Gruppen, **dadurch gekennzeichnet, dass** dieses erhältlich ist durch die Umsetzung von Kohlenstoffmaterial mit organischen Verbindungen ausgewählt aus der Gruppe 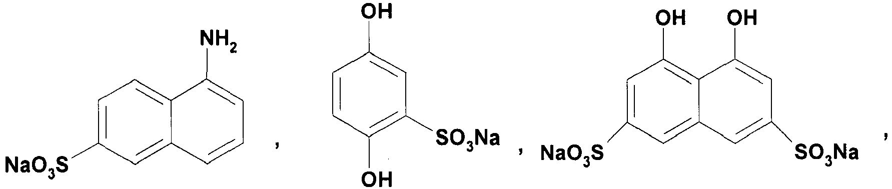 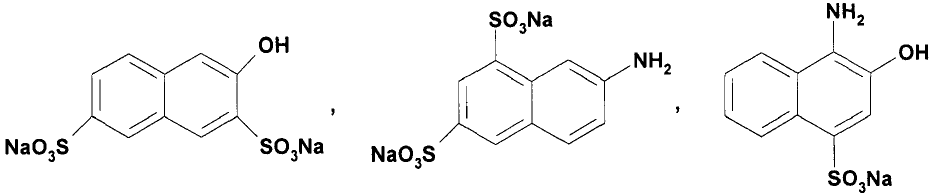 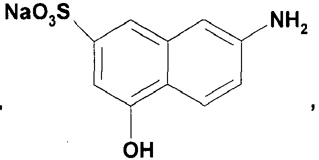 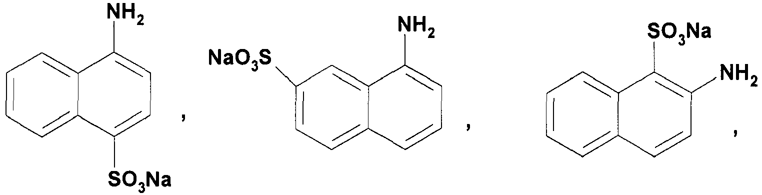 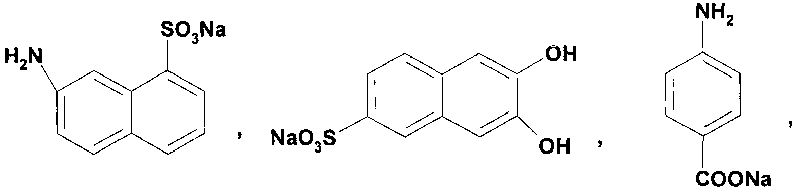 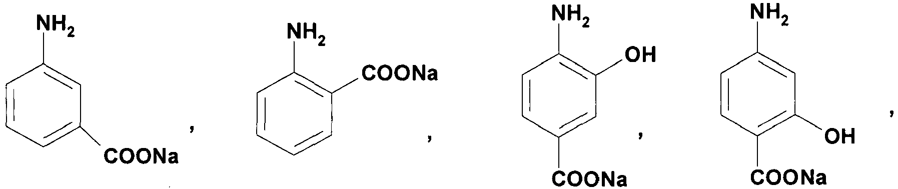 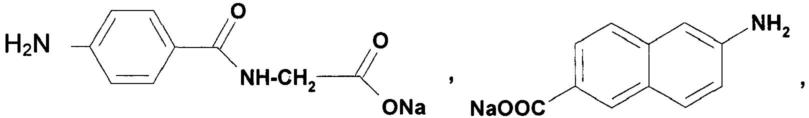 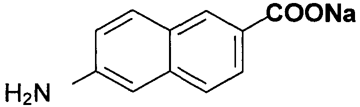 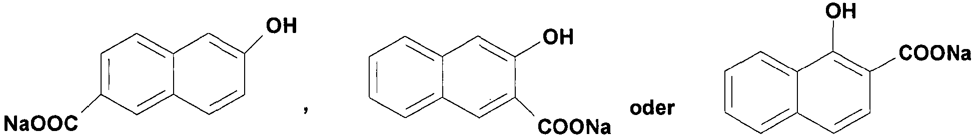 oder mit einem K oder N(R⁹)₄ als Gegenion.

2. Kohlenstoffmaterial mit organischen Gruppen nach Anspruch 1, **dadurch gekennzeichnet, dass** das Kohlenstoffmaterial Ruß, Graphitpulver, Graphitfasern, Kohlenstofffasern, Kohlenstofffibrillen, Kohlenstoffnanoröhren, Kohlenstoffgewebe, glasartige Kohlenstoffprodukte, Aktivkohle oder Fullerene ist.

3. Verfahren zur Herstellung des Kohlenstoffmaterials mit organischen Gruppen nach einem der Ansprüche 1 bis 2, **dadurch gekennzeichnet, dass** man Kohlenstoffmaterial mit organischen Verbindungen gemäß Anspruch 1 umsetzt.

4. Verwendung des Kohlenstoffmaterials nach einem der Ansprüche 1 bis 2 in Kautschuk, Kunststoff, Druckfarben, Tinten, Inkjet-Tinten, xerographischen Tonern, Lacken, Farben, Bitumen, Beton oder anderen Baustoffen, Papier oder als Reduktionsmittel in der Metallurgie.

5. Dispersion, **dadurch gekennzeichnet, dass** diese Kohlenstoffmaterial mit organischen Gruppen nach Anspruch 1 bis 2 und mindestens ein Lösungsmittel enthält.

6. Dispersion nach Anspruch 5, **dadurch gekennzeichnet, dass** diese zusätzlich Additive enthält.

7. Verfahren zur Herstellung der Dispersion nach Anspruch 5, **dadurch gekennzeichnet, dass** man die Dispergierung des Kohlenstoffmaterials mit organischen Gruppen in mindestens einem Lösungsmittel mit Perlmühlen, Ultraschallgeräten, Hochdruckhomogenisatören, Microfluidizern, Rotor-Stator-Aggregate oder vergleichbaren Aggregaten durchführt.

8. Verwendung der Dispersion nach Anspruch 5 in Kautschuk, Kunststoff, Druckfarben, Tinten, Inkjet-Tinten, xerographischen Tonern, Lacken und Farben, Bitumen, Beton und anderen Baustoffen oder Papier.

9. Verwendung der Dispersion nach Anspruch 5 zur Einfärbung und zum UV-Schutz von Kunststoffen, Latizes, Textilien,
Leder, Klebstoffen, Silikonen, Beton, Baustoffen, Papier, Fasern und Erde.

10. Verwendung der Dispersion nach Anspruch 5 zur antistatischen Ausrüstung von Materialien.

## Claims

1. A carbon material having organic groups, **characterized in that** it is obtainable by the reaction of carbon material with organic compounds selected from the group 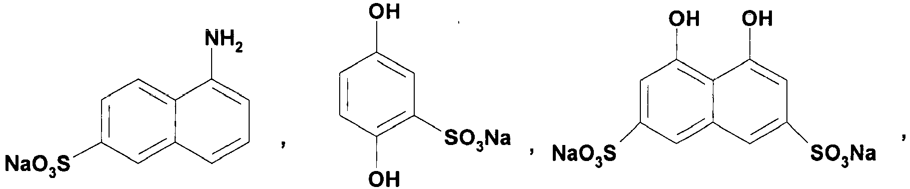 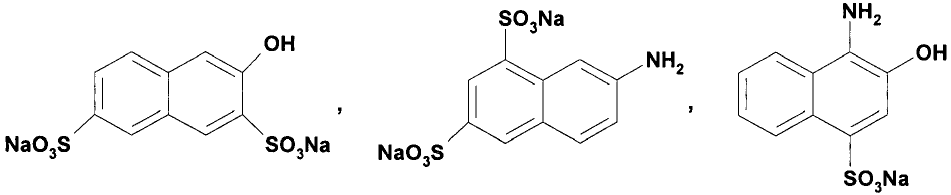 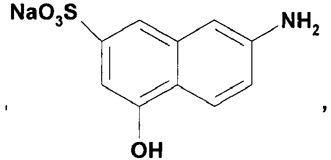 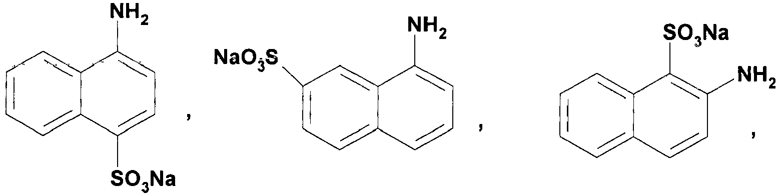 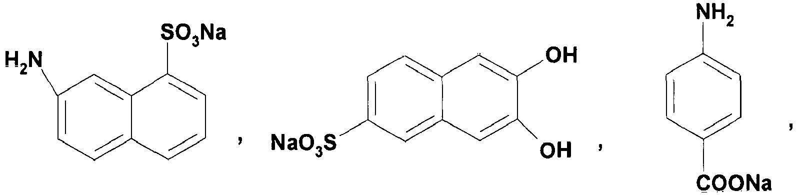 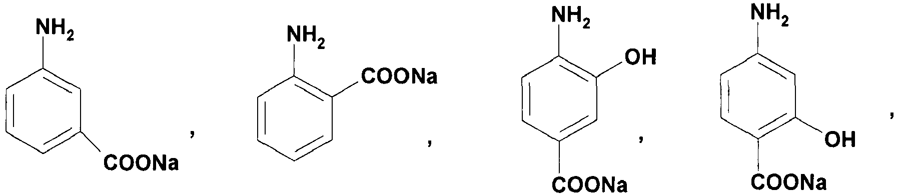 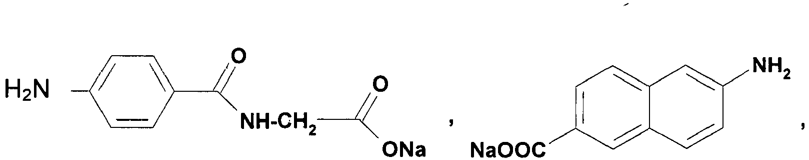 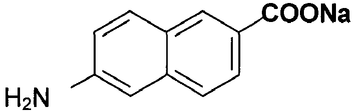 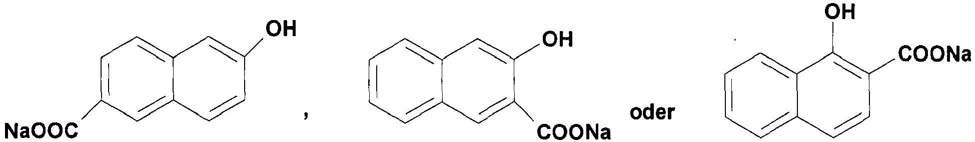 or with a K or N(R⁹)₄ as counter-ion.

2. A carbon material having organic groups according to claim 1, **characterized in that** the carbon material is carbon black, graphite powder, graphite fibres, carbon fibres, carbon fibrils, carbon nanotubes, carbon fabrics, glassy carbon products, activated carbon or fullerenes.

3. A process for preparing the carbon material having organic groups according to any one of claims 1 to 2, **characterized in that** carbon material is reacted with organic compounds according to claim 1.

4. The use of the carbon material according to any one of claims 1 to 2 in rubber, plastics, inks, inkjet inks, xerographic toners, coatings, paints, bitumen, concrete or other building materials, paper or as a reducing agent in metallurgy.

5. A dispersion, **characterized in that** it comprises carbon material having organic groups according to any of claims 1 to 2 and at least one solvent.

6. A dispersion according to claim 5, **characterized in that** it further comprises additives.

7. A process for producing the dispersion according to claim 5, **characterized in that** the carbon material having organic groups is dispersed in at least one solvent using a bead mill, an ultrasonicator, a high pressure homogenizer, a microfluidizer, a rotor-stator assembly or a comparable assembly.

8. The use of the dispersion according to claim 5 in rubber, plastics, inks, inkjet inks, xerographic toners, coatings and paints, bitumen, concrete and other building materials or paper.

9. The use of the dispersion according to claim 5 for the coloration and for UV stabilization of plastics, latices, textiles, leather, adhesives, silicones, concrete, building materials, paper, fibres and earth.

10. The use of the dispersion according to claim 5 for antistatic rendering of materials.

## Revendications

1. Matériau en carbone et doté de groupes organiques, **caractérisé en ce qu'**il est accessible par réaction du matériau en carbone avec des composés organiques choisis dans l'ensemble des suivants : 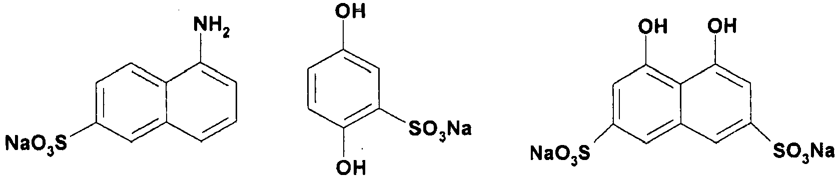 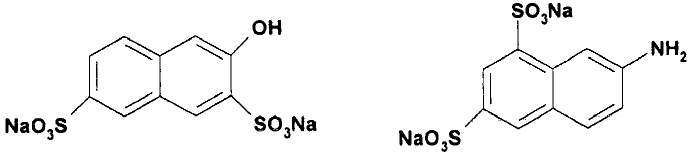 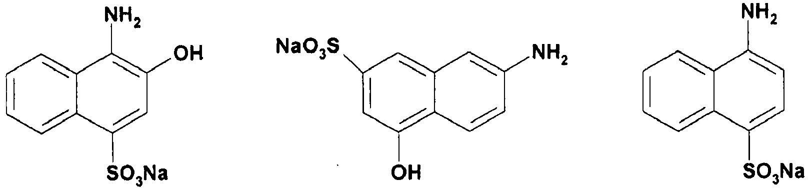 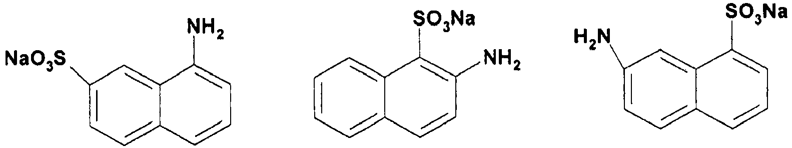 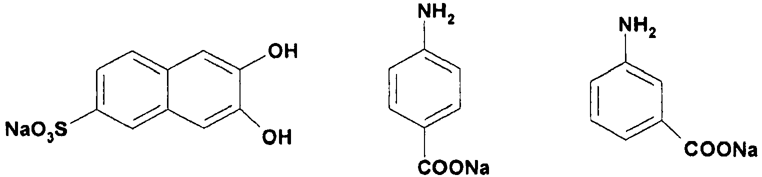 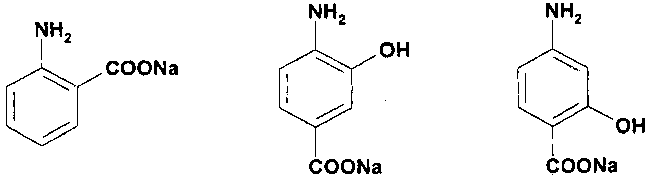 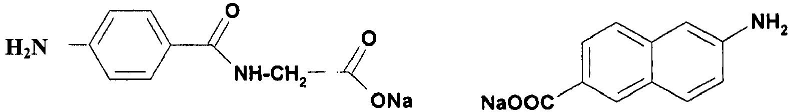 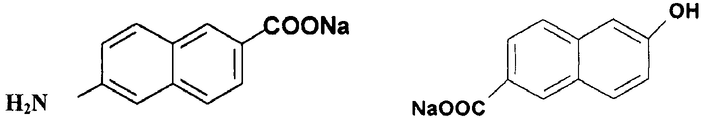 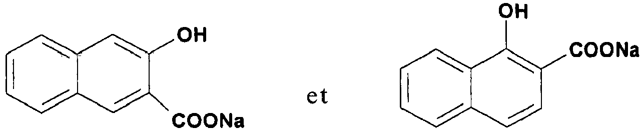 ainsi que ceux comportant, en tant que contre-ion, un ion de potassium ou de formule N(R⁹)₄.

2. Matériau en carbone et doté de groupes organiques, conforme à la revendication 1, **caractérisé en ce que** le matériau en carbone est un noir de fumée, une poudre de graphite, des fibres de graphite, des fibres de carbone, des fibrilles de carbone, des nanotubes de carbone, un tissu en carbone, un produit en carbone de type verre, un charbon actif ou un fullerène.

3. Procédé de production d'un matériau en carbone et doté de groupes organiques, conforme à l'une des revendications 1 et 2, **caractérisé en ce qu'**on fait réagir le matériau en carbone avec des composés organiques selon la revendication 1.

4. Utilisation d'un matériau en carbone conforme à l'une des revendications 1 et 2 dans un caoutchouc, une matière plastique, des encres d'imprimerie, des encres, des encres pour impression par jets d'encre, des toners pour xérographie, des vernis, des teintures, des bitumes, du béton ou d'autres matériaux de construction, ou un papier, ou comme agent réducteur en métallurgie.

5. Dispersion **caractérisée en ce qu'**elle contient un matériau en carbone et doté de groupes organiques, conforme à l'une des revendications 1 et 2, et au moins un solvant.

6. Dispersion conforme à la revendication 5, **caractérisée en ce qu'**elle contient en outre des adjuvants.

7. Procédé de production d'une dispersion conforme à la revendication 5, **caractérisé en ce que** l'on opère la dispersion du matériau en carbone et doté de groupes organiques dans au moins un solvant au moyen d'un broyeur à billes, d'un appareil à ultrasons, d'un homogénéisateur haute pression, d'un microfluidiseur, d'un appareil à rotor et stator ou d'appareils comparables.

8. Utilisation d'une dispersion conforme à la revendication 5 dans un caoutchouc, une matière plastique, des encres d'imprimerie, des encres, des encres pour impression par jets d'encre, des toners pour xérographie, des vernis, des teintures, des bitumes, du béton ou d'autres matériaux de construction, ou un papier.

9. Utilisation d'une dispersion conforme à la revendication 5 pour la coloration et la protection anti-UV de matières plastiques, de latex, de textiles, de cuir, de colles, de silicones, de béton, de matériaux de construction, de papiers, de fibres ou de sols.

10. Utilisation d'une dispersion conforme à la revendication 5 pour munir des matériaux d'un apprêt antistatique.
